# EUROPEAN PATENT APPLICATION

(11) **EP 4 497 737 A1**
(43) Date of publication of application: **29.01.2025**
(21) Application number: 23187845.5
(22) Date of filing: 26.07.2023
(51) Int. Cl.: C04B 28/08, C04B 40/00

(54) **ACTIVATION OF MINERAL BINDERS COMPRISING STEELMAKING SLAG AND BUILDING MATERIALS COMPRISING THEM**

(71) Applicant: Sika Technology AG, 6340 Baar (CH)
(72) Inventor: LE SAINT, Guillaume, 73230 Thoiry (FR); LEVESQUE, Olivier, 38600 Crémieu (FR); MARTIN, Charlene, 38080 Four (FR); SOUDIER, Jerome, 01150 Vaux en Bugey (FR)
(74) Representative: Sika Patent Attorneys

(57) **Abstract**

The present invention relates to methods for the activation by an activator comprising ultrafine calcium carbonate and at least one alkanolamine of mineral binders comprising steelmaking slag. The present invention also relates to building materials comprising an activated mineral binder obtained by such methods and uses thereof.

## Description

### Technical Field

The present invention relates to methods for the activation of mineral binders comprising steelmaking slag. The present invention also relates to building materials comprising activated mineral binders based on steelmaking slag.

### Background of the invention

Many building materials, especially concrete or mortars, rely on cementitious binders. Cementitious binders are mineral, hydraulic binders the most abundant of which are cements and especially Ordinary Portland Cement (OPC). However, the use of cements and especially of Ordinary Portland Cement has a high environmental footprint. One major reason are the high CO₂ emissions associated with the manufacture of cements. Many efforts have thus been made to at least partially replace cements as binders from building materials.

One possibility is the use of materials with cementitious properties, pozzolanes and/or latent hydraulic materials as cement replacement. An especially appealing material of this kind is slag as it is available as a by-product of various metallurgical process, especially iron and steelmaking, in large quantities.

One specific type of slag is steelmaking slag, especially converter slag which is also called Basic Oxygen Furnace slag (BOF or BOFS). BOFS is generated during the steelmaking process when raw iron is oxidized in the converter by oxygen to reduce the carbon content of the raw iron.

It is well known in the art that slags need to be activated to play their role as hydraulic binders.

WO 2017/198930 (Saint Gobain Weber) teaches a GGBS based binder accelerated by the addition of calcium sulfate and a fine carbonate material or silicate material.

WO 2022/238376 (Sika Technology) teaches various accelerators, such as alkanolamines and/or carboxylic acids, for the reaction of steelmaking slag, especially BOFS, with water.

EP 4 129 950 (Parma Oy) discloses a concrete composition based on Portland cement and furnace slag and activated with precipitated calcium carbonate.

However, the strength development of binders based on slag, especially steelmaking slag, is often still not fast enough even in case where known activators are added. There exists a continued need for improved ways for the activation of mineral binders based on steelmaking slag.

### Summary of the invention

It is an object of the present invention to provide methods for the activation of mineral binders based on steelmaking slag. In particular, the compressive strength of mineral binders comprising steelmaking slag when reacted with water should be increased by a method of the present invention.

It is a further object of the present invention to provide building materials based on mineral binders comprising steelmaking slag and which are activated.

Surprisingly, it has been found that a combination of ultrafine calcium carbonate (UFCC) and at least one alkanolamine is a useful activator for mineral binders comprising steelmaking slag.

The object of the present invention is therefore solved by a method as claimed in claim 1.

Further aspects of the present invention are the subject of independent claims. Preferred embodiments of the present invention are the subject of dependent claims.

### Ways for carrying out the invention

In a first aspect the present invention relates to a method for the activation of a mineral binder comprising steelmaking slag, said method comprising the steps of
(i) providing a mineral binder comprising steelmaking slag,
(ii) providing an activator comprising ultrafine calcium carbonate and at least one alkanolamine,
(iii) mixing the mineral binder and the activator.

The term "activation" within the present context stands for the increase of reactivity of steelmaking slag with water. An increase of reactivity can for example be measured by measuring the compressive strength of a test specimen after hardening for a given period of time, for example after 1 hour, 1 day, 28 days, or longer. An activation is given when an increased compressive strength after a given period of time results as compared to a reference without activator added. Compressive strength can especially be measured according to standard EN 12190:1998. An "activator" is a compound or mixture of compounds that can bring about an activation. The activation can also be measured by determining the setting time of a mineral binder or building material. The setting time can for example be measured by determining the ultrasonic propagation velocity in the mineral binder or building material after mixing with water.

A mineral binder within the present context is a material comprising at least one steelmaking slag. A mineral binder may additionally comprise further binders, especially selected from cements, pozzolanes, latent hydraulic materials, and non-hydraulic materials. Cements can in particular be cements of type CEM I, CEM II, CEM III, CEM IV, and CEM V as described in standard EN 197-1, cements of type CEM VI as described in standard DIN EN 197-5, calcium aluminate cements as described in standard EN 14647, and/or calcium sulphoaluminate cements. Pozzolanes and latent hydraulic materials preferably are selected from the group consisting of clays, preferably low-temperature calcined clays, especially metakaolin, kiln dusts, microsilicas, fly ashes, pyrogenic silicas, precipitated silicas, silica fumes, zeolites, rice husk ashes, burnt oil shales, and natural pozzolanes such as pumices, trasses, slates or low-temperature calcined slates, and volcanic ashes. Non-hydraulic materials may especially be lime, especially according to standard EN 459-1, or calcium sulfate, in particular gypsum, alpha- or beta-hemihydrate, anhydrite, or dihydrate.

Clays within the present context can be any type of clay mineral, for example crude clays, low-temperature calcined clays, or high-temperature calcined clays. Crude clays are clay minerals extracted from e.g. a quarry, optionally purified and optionally dried. Low-temperature calcined clays are clays that have been thermally treated at temperatures between 500 - 1200°C. Such low-temperature calcination typically leads to removal of interlayer water and at least partial, preferably full, dehydroxylation. For example, low-temperature calcined clay minerals may be produced in rotary kiln or in a flash calciner. A particularly useful low-temperature calcined clay is metakaolin. High-temperature calcined clays are clay minerals that have been thermally treated at temperatures above 1200°C and typically between 1300 - 1400°C. High-temperature calcined clays typically are crystalline or contain high amounts of crystalline phases, especially of mullite.

It is particularly preferred within the present context that the mineral binder comprises at least 20 w%, preferably at least 50 w%, more preferably at least 66 w%, still more preferably at least 80 w%, especially at least 85 w%, of steelmaking slag, relative to the total dry weight of the mineral binder.

Steelmaking slag can be any slag resulting from the making of steel. Especially, steelmaking slag is any of basic oxygen furnace slag (BOFS), ladle slag or electric arc furnace slag. A very preferred type of steelmaking slag within the present context is basic oxygen furnace slag (BOFS). The chemical composition of a BOFS can be determined by XRF as described in ASTM D5381-93. A typical BOFS has a chemical composition with 27 - 60 wt.-% of CaO, 8 - 38 wt.-% of iron oxides, 7 - 25 wt.-% of SiO₂, 1 - 15 wt.-% of MgO, 1 - 8 wt.-% of Al₂O₃, 0.5 - 8 wt.-% of MnO, 0.05 - 5 wt.-% of P₂O₅, and some minor components, especially oxides of Ti, Na, K, and Cr, with < 1 wt.-%. The chemical composition of a BOFS may vary depending on steel plant and depending on operation parameter of the basic oxygen furnace. Especially preferred BOFS has a chemical composition with 35 - 55 wt.-% of CaO, 10 - 30 wt.-% of iron oxides, 10 - 20 wt.-% of SiO₂, 2-10 wt.-% of MgO, 1 - 5 wt.-% of Al₂O₃, 0.5 - 5 wt.-% of MnO, 0.5 - 3 wt.-% of P₂O₅, and some minor components, especially oxides of Ti, Na, K, and Cr, with < 1 wt.-%.

A preferred steelmaking slag, especially a BOFS, has a content of iron oxides expressed as Fe₂O₃ of 8 - 38 w%, preferably of 10 - 30 wt.-%, and a content of sulfur expressed as SOs of < 1 w%, preferably < 0.5 w%, especially < 0.1 w%, in each case relative to the total dry weight of the steelmaking slag.

According to preferred embodiments of the present invention, the steelmaking slag is basic oxygen furnace slag. It is possible that the mineral binder consists of or essentially consists of basic oxygen furnace slag.

It can be preferable that the mineral binder is based in BOFS and additionally contains a source of SiO₂. In particular, the source of SiO₂ can be selected from fly ash, silica fume, pyrogenic silica, precipitated silica, rice husk ash, volcanic ashes, pumice, zeolites, diatomaceous earth, crushed glass, recycled concrete, low-temperature calcined clay, especially metakaolin, and mixtures thereof. The silica source may consist to an extent of at least 20 wt.-%, preferably at least 25 wt.-% of SiO₂, relative to the total dry weight of the silica source, as determined by XRF according to ASTM D5381-93. The silica source is in particular useful where BOFS having a high content of free lime is used. For example, a mineral binder can consist of 70 - 95 w% of BOFS and 5 - 30 w% of a source of SiO₂, especially metakaolin, in each case relative to the total dry weight of the mineral binder.

A particularly preferred mineral binder of the present invention comprises or consists of BOFS, a silica source, and at least one source of sulfate, especially calcium sulfate. The sulfate source can in particular be selected from gypsum, calcium sulfate alpha- or beta-hemihydrate, calcium sulfate anhydrite, calcium sulfate dihydrate, or aluminum sulfate. For example, a mineral binder can consist of 60 - 93 w% of BOFS, 5-20 w% of a source of SiO₂, especially metakaolin, and 2-20 w% of at least one source of sulfate, especially calcium sulfate, in each case relative to the total dry weight of the mineral binder.

Ultrafine calcium carbonate (UFCC) within the present context is calcium carbonate of very fine particle size. Especially, ultrafine calcium carbonate is calcium carbonate obtained in a grinding process, for example wet grinding or dry grinding process. The input material can, for example, be limestone. Ultrafine calcium carbonate very preferably is not precipitated calcium carbonate.

Particularly suitable ultrafine calcium carbonate of the present invention has an average particle size of between 0.01 - 500 µm, preferably 0.05 - 400 µm, more preferably 0.1 - 350 µm, still more preferably 2 - 300 µm. In particular, the average particle size D50 is > 10 µm and/or the particle size D98 > 250 µm. The particle size can be measured according to standard ISO 13320:2009. In particular, a Mastersizer 2000 instrument with a Hydro 2000G dispersion unit and the Mastersizer 2000 software from Malvern Instruments GmbH (Germany) can be used. The particle size D50 is the size of particles where 50% of an ensemble of particles have a larger particle size and 50% have a lower particle size. The particle size D50 thus corresponds to the average particle size or mean particle size.

Particularly suitable UFCC of the present invention has a Blaine surface as measured according to standard DIN 66126 of at least 1000 m²/kg.

UFCC of the present invention may be uncoated or may be coated. Coated UFCC especially are UFCC treated with fatty acid salts of calcium or magnesium such as calcium or magnesium stearate. Coated UFCC may also be treated with silanes or siloxanes. It is, for example, possible that a UFCC of the present invention comprises 3w% of stearate coating. It is preferred within the present context that the ultrafine calcium carbonate is uncoated.

UFCC of the present invention may be used in the form of a free flowing powder or in the form of a slurry, especially a slurry in water. For example, the activator of the present invention can comprise an aqueous slurry of UFCC with a content of dry matter of at least 30 w%, preferably at least 50 w%, and a content of UFCC in the dry matter of at least 50 w%, preferably at least 75 w%, especially 100 w%. A suitable slurry of UFCC is, for example, paper sludge.

The at least one alkanolamine preferably is selected from the group consisting of monoethanolamine, diethanolamine, triethanolamine (TEA), diethanolisopropanolamine (DEIPA), ethanoldiisopropanolamine (EDIPA), isopropanolamine, diisopropanolamine, triisopropanolamine (TIPA), N-methyldiisopropanolamine (MDIPA), N-methyldiethanolamine (MDEA), tetrahydroxyethylethylenediamine (THEED), and tetrahydroxyiso-propylethylenediamine (THIPD), as well as mixtures of two or more of these alkanolamines. A particularly preferred alkanolamine is TIPA or DEIPA.

It is particularly preferred that the activator is mixed with the mineral binder in a ratio of between 0.5 - 10 w%, preferably 1 - 8 w%, especially 3.5 - 7 w%, relative to the total dry weight of the steelmaking slag.

In particular, the ultrafine calcium carbonate is used in an amount of between 0.4 - 9 w%, preferably 2-8 w%, especially 3-7 w%, relative to the total dry weight of the steelmaking slag, and the at least one alkanolamine is used in an amount of between 0.1 - 1 w%, preferably 0.2 - 0.75 w%, especially 0.4 - 0.6 w%, relative to the total dry weight of the steelmaking slag.

In particular, the activator comprises the ultrafine calcium carbonate and the at least one alkanolamine in a weight ratio of between 3:1 to 15:1, preferably 5:1 to 10:1.

An activator of the present invention may comprise further components besides the UFCC and at least one alkanolamine. In particular, the activator additionally comprises at least one compound selected from polyhydric alcohols or carboxylic acids. Especially, the activator comprises an additional compound selected from glycerin or a hydroxycarboxylic acid, in particular citric acid.

The term "citric acid" within the present context is meant to encompass citric acid as well as salts of citric acid. Salts of citric acid are also called citrates. For example, the term "citric acid" also relates to alkali metal or alkaline earth metal salts of citric acid. Particularly suitable types of citric acid within the present context are monosodium citrate, disodium citrate, and trisodium citrate, especially trisodium citrate.

The use of polyhydric alcohols or carboxylic acids, especially of glycerin or a hydroxycarboxylic acid, in particular citric acid, in addition to UFCC and at least one alkanolamine leads to an increased activation and therefore further increased compressive strength of a hardening composition comprising mineral binder based on steelmaking slag.

A mineral binder within the present context can be part of a building material. A building material comprises at least one mineral binder comprising at least one steelmaking slag and in addition comprises other constituents. In particular, a building material comprises at least one mineral binder comprising at least one steelmaking slag, aggregates, fillers, admixtures, and optionally water. A building material can especially be a dry mortar, a wet mortar, or a concrete.

It is possible that the UFCC and the at least one alkanolamine and optionally further constituents of the activator are mixed with the mineral binder together or separately of each other. The step (iii) of mixing the mineral binder and the activator may therefore consist of only one mixing step or may comprise several mixing steps.

According to preferred embodiments, in step (iii) the ultrafine calcium carbonate and/or the at least one alkanolamine of the activator are mixed with at least one constituent of the mineral binder before and/or during the milling of said constituent, preferably the steelmaking slag.

Mixing the mineral binder and activator before and/or during the milling of the mineral binder is especially useful where the UFCC is present in the form of an aqueous slurry.

In particular it is possible to mix the UFCC with the mineral binder or another constituent of the building material, especially aggregate or filler, before or during the milling of the mineral binder or the other constituent of the building material. Especially in this case, the UFCC can be used in the form of a dry powder or in the form of an aqueous slurry. The at least one alkanolamine can be mixed in the form of a pure liquid, in the form of an aqueous dispersion or solution, or adsorbed by a solid carrier, with the mineral binder or other constituent of the building material comprising interground UFCC.

It is likewise possible to mix the UFCC with the mineral binder or building material. Especially in this case, the UFCC can be used in the form of a dry powder. The at least one alkanolamine can be mixed in the form of a pure liquid, in the form of an aqueous dispersion or solution, or adsorbed by a solid carrier, with the mineral binder or building material comprising the UFCC.

It is also likewise possible to mix the at least one alkanolamine with the mineral binder or another constituent of the building material, especially aggregate or filler, before or during the milling of the mineral binder or the other constituent of the building material. Especially in this case, the at least one alkanolamine can be used in the form of a pure liquid, in the form of an aqueous dispersion or solution, or adsorbed by a solid carrier. The at least one UFCC can then be mixed in the form of a dry powder or an aqueous slurry with the mineral binder or other constituent of the building material comprising interground alkanolamine.

It is likewise possible to mix the at least one alkanolamine with the mineral binder or building material. Especially in this case, at least one alkanolamine can be adsorbed by a solid carrier. The at least one UFCC can then be mixed in the form of a dry powder or an aqueous slurry with the mineral binder or building material comprising the at least one alkanolamine.

According to a particularly preferred embodiment, the at least one alkanolamine is adsorbed by a solid carrier to yield a powdered product. The powdered product obtained and the UFCC in the form of a dry powder are then mixed with the mineral binder or building material of the present invention. This is in particular suitable to prepare a dry mortar composition.

According to another particularly preferred embodiment, the UFCC is mixed in dry form with the mineral binder or building material of the present invention. The at least one alkanolamine is mixed in the form of a dispersion or solution in water together with any mixing water with the mineral binder or building material comprising the UFCC. This is for example suitable to prepare a wet mortar or a concrete composition.

All features and embodiments as described further below also apply to this aspect.

In another aspect the present invention relates to an activator for mineral binders comprising steelmaking slag, said activator comprising a ultrafine calcium carbonate and at least one alkanolamine.

All features and embodiments as described above also apply to this aspect.

In particular, the activator may additionally comprise at least one compound selected from polyhydric alcohols or carboxylic acids, preferably selected from glycerin or a hydroxycarboxylic acid, in particular citric acid.

The activator of the present invention may be present as a mono-component composition. This means that the UFCC and the at least one alkanolamine and optional any further constituents are present as a mixture in one container. A mono-component activator has the advantage that dosing is particularly easy.

The activator of the present invention may be present as a multi-component composition, especially as a two-component composition. In a multi-component composition the UFCC and the at least one alkanolamine are present in two different, spatially separated containers. A multi-component activator has the advantage that dosage of individual components can be easily adjusted and that shelf-life of the individual components can be longer.

It is in particular possible that the activator of the present invention is a two-component activator consisting of UFCC in dry powder form as a first component and the at least one alkanolamine and optionally further constituents as a second component. Especially, the alkanolamine and optionally further constituents are present in liquid form, preferably as a dispersion or solution in water.

It is in particular also possible that the activator of the present invention is a two-component activator consisting of UFCC in dry powder form as a first component and the at least one alkanolamine and optionally further constituents adsorbed by a solid carrier as a second component, preferably adsorbed by a solid selected from calcined clay, exfoliated vermiculite, zeolites, expanded perlite, precipitated silica, diatomaceous earth, and crushed cementitious foam.

It is further possible that the activator of the present invention is a two-component activator consisting of UFCC in the form of an aqueous slurry as a first component and the at least one alkanolamine and optionally further constituents in a second component. Especially, the alkanolamine and optionally further constituents are present in liquid form, preferably as a dispersion or solution in water.

It is further possible that the activator of the present invention is a two-component activator consisting of UFCC in dry powder form as a first component and the at least one alkanolamine, additional UFCC, and optionally further constituents adsorbed by a solid carrier as a second component.

It is further possible that the activator of the present invention is a mono-component activator comprising UFCC in dry powder form and comprising the at least one alkanolamine adsorbed by a solid carrier. Further constituents may be present in powder form or adsorbed by a solid carrier. The solid carrier preferably is a porous solid such as, for example, calcined clay, exfoliated vermiculite, zeolites, expanded perlite, precipitated silica, diatomaceous earth, and crushed cementitious foam.

According to another aspect, the present invention relates to a building material comprising an activated mineral binder obtained by a method as described above in an amount of at least 15 w%, preferably at least 17 w%, more preferably at least 25 w%, especially at least 33 w%, relative to the total dry weight of the building material. All features and embodiments as described above also apply to this aspect.

A building material comprises at least one mineral binder comprising at least one steelmaking slag and in addition comprises other constituents. In particular, a building material comprises at least one mineral binder comprising at least one steelmaking slag, aggregates, fillers, admixtures, and optionally water.

For example, a building material of the present invention comprises a mineral binder comprising or consisting of BOFS and at least one source of SiO₂, preferably low-temperature calcined clay, aggregates, fillers, admixtures, and optionally water.

For example, a building material of the present invention comprises a mineral binder comprising or consisting of BOFS, at least one source of SiO₂, preferably low-temperature calcined clay, a source of sulfate, especially calcium sulfate, aggregates, fillers, admixtures, and optionally water.

A building material can especially be a dry mortar, a wet mortar, or a concrete. An activated mineral binder is a mineral binder as described above additionally comprising an activator as described above.

A building material therefore comprises an activated mineral binder, the activated mineral binder being a mix of a mineral binder comprising steelmaking slag and an activator comprising ultrafine calcium carbonate and at least one alkanolamine.

The building material comprises an activated mineral binder in an amount of at least 15 w%, preferably at least 17 w%, more preferably at least 25 w%, especially at least 33 w%, relative to the total dry weight of the building material.

Preferably, the building material additionally comprising at least one aggregate, optionally fillers, and optionally admixtures.

Aggregates can be any aggregate typically used for construction materials. Typical aggregates are for example rock, crushed stone, such as crushed limestone, gravel, sand, especially quartz sand, river sand and/or manufactured sand. Aggregates may also be bio-based aggregates such as for example hemp fibers. Suitable crushed stone and/or sand within the present context may have a particle size of between 0.063 - 4 mm. Suitable gravel may have a particle size between 8 - 32 mm. However, other particle sizes are also possible. Particle sizes can be measured by sieve analysis according to standard DIN EN 933-1:2012-03. Suitable aggregates are for example described in standard EN 12620:2013. Of course, a mixture of aggregates is possible.

Aggregates within the present context do not include fine powders which are referred to as fillers. A filler has an average particle size D50 of between 0.063 mm and 10 µm. A particularly suitable filler is fine limestone powder or fine dolomite powder. UFCC, as defined above, is not a filler.

Admixtures are materials which are chemically different from the UFCC and the at least one alkanolamine as defined above. Especially the admixtures can be selected from plasticizers, superplasticizers, shrinkage reducers, air entrainers, de-aerating agents, stabilizers, viscosity modifiers, thickeners, water reducers, retarders, water resisting agents, fibers, blowing agents, defoamers, redispersible polymer powders, dedusting agents, chromate reducers, pigments, biocides, corrosion inhibitors, and steel passivating agents, provided that these admixtures are chemically different from the kinetic regulator and the accelerator as defined above. Of course, a mixture of two or more of these additives is also possible.

In another aspect the present invention relates to the use of a building material as described above as a cementitious tile adhesive, a grouting material, a self-levelling underlayment, a self-levelling overlayment, a render, a repair mortar, a masonry thin join mortar or concrete, a screed, a wall leveller for interior or exterior use, a non-shrink grout, a thin joint mortar, a waterproofing mortar, or an anchoring mortar.

A cementitious tile adhesive is especially according to standard EN 12004-1. A grouting material is especially according to standard EN 13888. A self-levelling underlayment or a self-levelling overlayment is especially according to standard EN 13813. A render is especially according to standard EN 998-1. A repair mortar is especially according to standard EN 1504-3. A masonry mortar or concrete is especially according to standards EN 998-2 and EN 206-1. A screed is especially according to standard EN 13813. A non-shrink grout is especially according to standard EN 1504-6. A thin joint mortar is especially according to standard EN 998-2. A waterproofing mortar is especially according to standard EN 1504-2. An anchoring mortar is especially according to standard EN 1504-6.

All features and embodiments as described above also apply to this aspect.

In another aspect the present invention relates to a shaped body obtained in a method comprising the steps of
(i) mixing a building material as described above with water,
(ii) shaping the mixture thus obtained into a shaped body of any desired form, and
(iii) curing the shaped body obtained in step (ii).

All features and embodiments as described above also apply to this aspect.

The building material may be mixed with water in an amount to yield a water to powder weight ratio of 0.1 - 0.9, preferably 0.2 - 0.6, especially 0.3 - 0.4.

Ways to mix the building material and water are not particularly limited. For example, the building material can be provided to a mixing aggregate, water added, and mixing done until a homogeneous wet mix is obtained. Suitable mixing aggregates include, but are not limited to hand held agitator, Hobart mixer, portable concrete mixer, mixing truck, mixing bucket, paddle mixer, jet mixer, screw mixer, auger mixer, horizontal single shaft mixer, twin shaft paddle mixer, vertical shaft mixer, ribbon blender, orbiting mixer, change-can mixer, tumbling vessel, vertical agitated chamber or air agitated operations. Mixing can be continuously, semi-continuously or batchwise.

Shaping of the wet mix can be done for example by way of brushing, rolling, troweling, spraying, pouring, or dispensing. It is possible to use molds. It is, for example, possible to shape the wet mix by way of additive manufacturing, for example by dispensing from an automated dispenser such as a 3D printer.

The shaped body preferably is cured at temperatures between +4 and + 50 °C. However, lower and higher temperatures are possible. Curing under pressure or with steam is also possible.

### Examples

**Table 1: Raw materials**

| | |
|---|---|
| BOFS | Basic oxygen furnace slag, particle size D10 to D90 = 1.4 - 75 µm, D50 = 16 µm; free lime: 10.9 wt.-% |
| UFCC 1 | Ultrafine calcium carbonate (uncoated, particle size D50: 3 µm, D98: 140 µm) |
| UFCC 2 | Ultrafine calcium carbonate (uncoated, particle size D50: 3 µm, D98: 10 µm) |
| TIPA | Triisopropanolamine (Sigma-Aldrich, 95% purity) |
| DEIPA | Diethanolisopropanolamine (Sigma-Aldrich, 94% purity) |
| Citrate | Trisodium citrate (Sigma-Aldrich, >98% purity) |

### Example 1

For the preparation of formulations, dry constituents were mixed in the amounts indicated in the following table 2 until visually homogeneous. Water was added in an amount to result in a weight ratio of water to dry powder of 0.29. TIPA and citrate were pre-mixed in the mixing water and thus added together with the mixing water in the amount indicated in following table 2. Mixing of dry mix and mixing water was done for 1.5 to 2 min at slow speed settings (140 rpm and 62 rpm planetary movement) on a Hobart mixer.

Comparative examples (not according to the invention) are marked "Ref" in the following table 2, Example (according to the invention) are marked as "E".

Compressive strength was measured after the time indicated in below table 2 in accordance with standard EN 12190:1998.

**Table 2: Formulations and measurement results**

| **Example** | **Ref-1** | **Ref-2** | **E-1** | **E-2** |
|---|---|---|---|---|
| BOFS [g] | 100 | 100 | 97.5 | 97.5 |
| UFCC 1 [g] | | | 2.5 | |
| UFCC 2 [g] | | | | 2.5 |
| TIPA [g] | | 0.555 | 0.555 | 0.555 |
| Citrate [g] | | 0.853 | 0.853 | 0.853 |
| Compressive strength, 1d [MPa] | 0.13 | 20.4 | 24.0 | 25.7 |
| Compressive strength, 7d [MPa] | 1.2 | 30.2 | 31.9 | 35.2 |

## Claims

1. A method for the activation of a mineral binder comprising steelmaking slag, said method comprising the steps of
(i) providing a mineral binder comprising steelmaking slag,
(ii) providing an activator comprising ultrafine calcium carbonate and at least one alkanolamine,
(iii) mixing the mineral binder and the activator.

2. A method as claimed in at least one of the preceding claims, **characterized in that** the ultrafine calcium carbonate is uncoated.

3. A method as claimed in at least one of the preceding claims, **characterized in that** the activator additionally comprises at least one compound selected from polyhydric alcohols or carboxylic acids.

4. A method as claimed in claim 3, **characterized in that** the additional compound is selected from glycerin or is a hydroxycarboxylic acid, in particular citric acid.

5. A method as claimed in at least one of the preceding claims, **characterized in that** the activator is mixed with the mineral binder in a ratio of between 0.5 - 10 w%, preferably 1 - 8 w%, especially 3.5 - 7 w%, relative to the total dry weight of the steelmaking slag.

6. A method as claimed in at least one of the preceding claims, **characterized in that** the activator is a two-component activator consisting of ultrafine calcium carbonate in dry powder form as a first component and the at least one alkanolamine and optionally further constituents adsorbed by a solid carrier as a second component, preferably adsorbed by a solid selected from calcined clay, exfoliated vermiculite, zeolites, expanded perlite, precipitated silica, diatomaceous earth, and crushed cementitious foam.

7. A method as claimed in at least one of the preceding claims, **characterized in that** the mineral binder comprises at least 20 w%, preferably at least 50 w%, more preferably at least 66 w%, still more preferably at least 80 w%, especially at least 85 w%, of steelmaking slag, relative to the total dry weight of the mineral binder.

8. A method as claimed in at least one of the preceding claims, **characterized in that** the steelmaking slag is basic oxygen furnace slag.

9. A method as claimed in at least one of the preceding claims, **characterized in that** in step (iii) the ultrafine calcium carbonate and/or the at least one alkanolamine of the activator are mixed with at least one constituent of the mineral binder before and/or during the milling of said constituent, preferably the steelmaking slag.

10. An activator for mineral binders comprising steelmaking slag, said activator comprising a ultrafine calcium carbonate and at least one alkanolamine.

11. An activator according to claim 10, **characterized in that** it additionally comprises at least one compound selected from polyhydric alcohols or carboxylic acids, preferably selected from glycerin or a hydroxycarboxylic acid, in particular citric acid.

12. A building material comprising an activated mineral binder obtained by a method as claimed in at least one of claims 1 - 9 in an amount of at least 15 w%, preferably at least 17 w%, more preferably at least 25 w%, especially at least 33 w%, relative to the total dry weight of the building material.

13. A building material as claimed in claim 12, additionally comprising at least one aggregate, optionally fillers, and optionally admixtures.

14. Use of a building material according to claim 13 as a cementitious tile adhesive, a grouting material, a self-levelling underlayment, a self-levelling overlayment, a render, a repair mortar, a masonry thin join mortar or concrete, a screed, a wall leveller for interior or exterior use, a non-shrink grout, a thin joint mortar, a waterproofing mortar, or an anchoring mortar.

15. A shaped body obtained in a method comprising the steps of
(i) mixing a building material according to claim 13 with water,
(ii) shaping the mixture thus obtained into a shaped body of any desired form, and
(iii) curing the shaped body obtained in step (ii).
